# EUROPÄISCHE PATENTSCHRIFT

(11) **EP 0 995 666 B1**
(45) Veröffentlichungstag und Bekanntmachung des Hinweises auf die Patenterteilung: **18.09.2002**
(21) Anmeldenummer: 99120659.0
(22) Anmeldetag: 19.10.1999
(51) Int. Cl.: B62D 27/02, B29C 65/02

(54) **Verbindungsverfahren und Bauteilverbindung von zwei oder mehr Bauteilen einer Fahrzeugkarosserie**
Bonding method and member junction of two or more members of a vehicle body
Méthode de connexion et raccordement de pièces de deux ou plusieurs des pièces de la carrosserie d'un véhicule

(30) Priorität: 22.10.1998 DE 29818803 U
(43) Veröffentlichungstag der Anmeldung: 26.04.2000
(73) Patentinhaber: KUKA Schweissanlagen GmbH, 86165 Augsburg (DE)
(72) Erfinder: Rippl, Peter, Dr., 86163 Augsburg (DE); Weh, Walter, 89343 Jettingen-Scheppach (DE); Fischer, Wolfgang, 86199 Augsburg (DE); Huber, Rudolf, 81245 München (DE)
(74) Vertreter: Ernicke, Hans-Dieter, Dipl.-Ing.

(56) Entgegenhaltungen:
- DE-A- 4 120 223
- PATENT ABSTRACTS OF JAPAN vol. 017, no. 633 (M-1513), 24. November 1993 (1993-11-24) & JP 05 196187 A (SEKISUI CHEM CO LTD), 6. August 1993 (1993-08-06)

## Beschreibung

Die Erfindung betrifft ein Verbindungsverfahren und eine Bauteilverbindung mit den Merkmalen im Oberbegriff des Hauptanspruchs.

Ein solches Verbindungsverfahren und eine derartige Bauteilverbindung sind aus der DE-A-41 20 223 bekannt. Sie wird in Verbindung mit einer Fahrzeugkarosserie eingesetzt, die als Rahmenkonstruktion aus rohrförmigen Bauteilen ausgebildet ist. Hierbei gibt es zwei Varianten. In der einen Ausführungsform werden die rohrförmigen Bauteile zunächst durch eine überlappte Steckverbindung formschlüssig miteinander in Eingriff gebracht, wobei in den Verbindungsbereich an der Überlappungsstelle anschließend ein Einkomponentenkleber von außen her durch Öffnungen im äußeren Rohrelement eingebracht wird. In der zweiten Variante wird ein Zweikomponentenkleber eingesetzt, wobei am einen Rohrende die eine Kleberkomponente und am anderen Rohrende die zweite Kleberkomponente aufgebracht ist. Die Rohrteile stecken teleskopartig ineinander, wobei zur Schaffung der Klebeverbindung die Rohrteile auseinander gezogen und die beiden Kleberkomponenten miteinander in Kontakt gebracht werden. Durch diesen internen Kontakt reagieren die beiden Kleberkomponenten miteinander und härten unter Schaffung der Klebeverbindung aus. Hierbei besteht die Gefahr, dass die Komponentenreaktion bereits beim ersten Kontakt der Kleberkomponenten beginnt und ein genaues Positionieren der beiden rohrförmigen Bauteile verhindert oder erschwert.

Eine andere Bauteilverbindung ist aus der DE-C-197 16 865 bekannt. Die Bauteile werden zunächst durch eine Steckverbindung formschlüssig in Eingriff gebracht und anschließend durch eine außenseitig aufgebrachte Schweißraupe gegenseitig fixiert. Anstelle der Schweißraupe kann auch eine Schraub-, Niet- oder Klebeverbindung vorhanden sein. Die Schweißverbindung hat den Nachteil, dass sie durch den hohen Wärmeeintrag zu Verzug an den Bauteilen führt. Eine Schraub- oder Nietverbindung ist mit einem erheblichen Fertigungs- und Montageaufwand verbunden. Eine Klebeverbindung ist nicht ohne weiteres möglich und hat ohne besondere Vorkehrungen auch keine ausreichende Festigkeit.

Die DE-A-196 53 509 zeigt eine ähnliche Bauteilverbindung für eine aus Rohrteilen bestehende Rahmenstruktur einer Fahrzeugkarosserie, einem sogenannten Space frame. Hier ergeben sich die gleichen Probleme und Nachteile wie beim eingangs genannten Stand der Technik.

Die JP-05 196187 A lehrt eine Verbindungsmethode für zwei gleichgroße und mit einer Kunstharzbeschichtung versehene Rohre. Die Rohrenden werden über eine Steckmuffe aus einem thermoplastischen Kunststoff im stumpfen Stoß miteinander verbunden, wobei die Rohrenden durch den Muffenkörper axial distanziert sind. Mittels einer Spule werden die thermoplastischen Rohrbeschichtungen und die Verbindungsmuffe erwärmt und miteinander verschmolzen.

Es ist daher Aufgabe der vorliegenden Erfindung, eine bessere Bauteilverbindung aufzuzeigen.

Die Erfindung löst diese Aufgabe mit den Merkmalen im Verfahrens- und Vorrichtungshauptanspruch.
Die erfindungsgemäße Anordnung eines extern aktivierbaren Verbindungselementes im Überlappungs- und Kontaktbereich der Bauteile zur Fixierung der Steckverbindung hat den Vorteil, daß beim Zusammenstecken der Bauteile keine Beeinträchtigung und kein Hindernis vorliegt. Insbesondere lassen sich dabei auch Toleranzen durch Schiebesitz ausgleichen. Die Verbindungsstelle befindet sich zwischen den Bauteilen an der Überlappungsstelle und damit in einem innenliegenden Bereich der Bauteile. Sie bietet dadurch einerseits eine besonders gute und haltbare Verbindung, die andererseits von außen nicht sichtbar ist und nicht stört.

Mit Hinblick auf einen möglichst geringen Fertigungs- und Montageaufwand ist es vorteilhaft, zumindest eines der Bauteile entsprechend vorzubereiten und mit dem Verbindungselement vorab auszurüsten.

Die Aktivierung des Verbindungselementes ohne oder nur mit geringer Wärmezufuhr hat den Vorteil, daß Verzugserscheinungen wie beim Schweißen ausgeschlossen sind. Die Paßgenauigkeit und Maßhaltigkeit der Bauteilverbindung bleibt dadurch sicher erhalten. Für die Ausgestaltung des Verbindungselementes und seiner Aktivierung gibt es unterschiedliche Möglichkeiten. Besonders günstig sind wärmeaktivierbare Schmelzstoffe, insbesondere Klebstoffe oder Lote. Diese brauchen nur eine geringe Wärmezufuhr, die vorteilhafterweise ohne Bauteilberührung durch eine bewegliche Spulenanordnung mittels eines hochfrequenten Wechselstromfeldes erfolgt. Dadurch sind auch schwer zugängliche Verbindungsstellen erreichbar. Außerdem kann der Verbindungsvorgang automatisiert werden. Die Spule läßt sich durch Roboter oder andere entsprechend bewegliche Manipulatoren handhaben.

Als Alternative sind auch Klebstoffe möglich, die durch Kraft oder Druck aktiviert werden, wobei z.B. mindestens eines der Bauteile mechanisch verformt wird. Die Umformung kann durch mechanisches Pressen und alternativ in besonders schonender Weise durch elektromagnetische Umformung von außen, durch hydraulisches Innenhochdruckumformen oder auf andere geeignete Weise geschehen. Hierbei läßt sich außerdem eine formschlüssige Bauteilverbindung erzielen, die eine höhere Belastbarkeit haben kann.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: in einer perspektivischen Ansicht eine Fahrzeugkarosserie mit mehreren untereinander verbundenen Bauteilen und einen Aktivator,
- Figur 2:: ein Bauteil in Form eines Knotens zur Verbindung mit anderen rohrförmigen Bauteilen,
- Figur 3:: einen Querschnitt durch eine mehrarmige Bauteilverbindung von Knoten und Rohren und

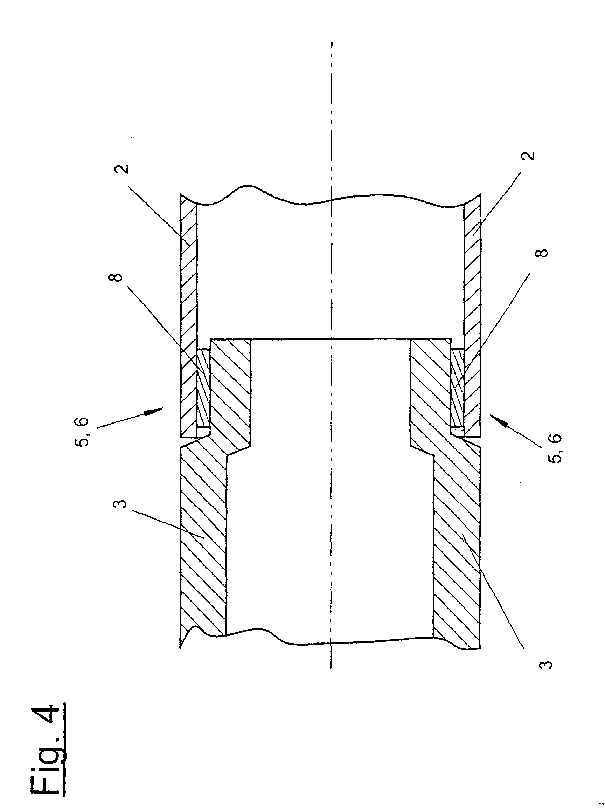

- Figur 4:: eine Variante einer Bauteilverbindung von zwei Rohren untereinander.

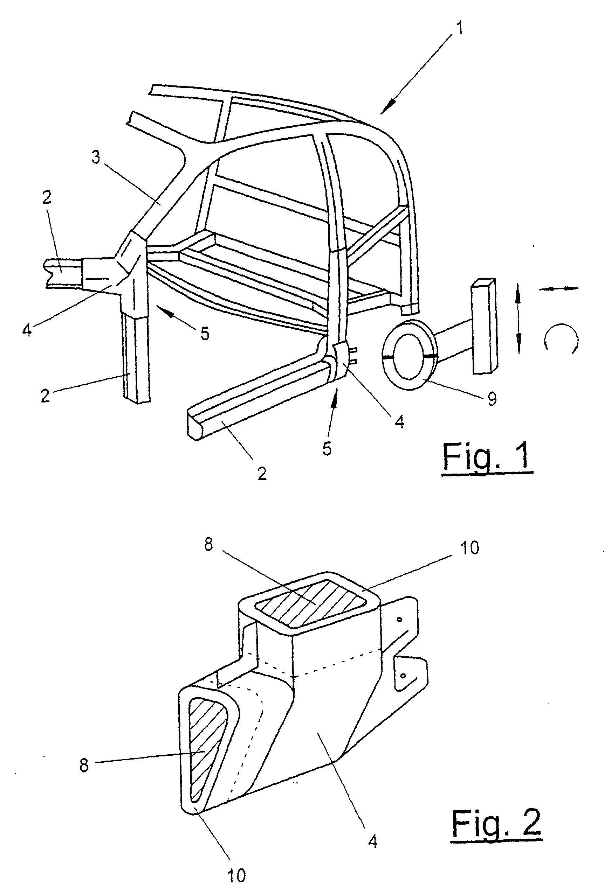

Figur 1 zeigt eine Fahrzeugkarosserie (1), die in der bevorzugten Ausführungsform als gitterförmige Rohrrahmen-Konstruktion ausgebildet ist. Diese Rohrrahmen werden auch als Gitterrahmen, Leiterrahmen oder Space frame bezeichnet und bilden vorzugsweise das komplette kubische Rohrgestell der Fahrzeugkarosserie. Alternativ kann es sich bei dem Rohrrahmen auch um ein einzelnes Karosseriebauteil, z.B. eine Bodengruppe oder dergleichen handeln. Die Fahrzeugkarosserie (1) bzw. der Rohrrahmen besteht aus mehreren Bauteilen (2,3,4), die miteinander durch eine Bauteilverbindung verbunden sind.

In einer nicht dargestellten Variante kann es sich bei der Rohrkonstruktion auch um ein Fahrwerk oder um Fahrwerksteile eines Fahrzeugs handeln. Die Bauteile können z.B. zu einer Achsaufhängung, einem Querträger oder dgl. gehören.

Die Bauteile (2,3,4) können von beliebig geeigneter Bauart sein. Vorzugsweise sind sie zumindest teilweise hohl. Im gezeigten Ausführungsbeispiel handelt es sich z.B. um ein oder mehrere mit zwei oder mehreren Armen ausgerüstete Knoten (4) und andere im wesentlichen rohrförmige oder stangenförmige Bauteile (2,3). Die Knotenarme werden vorzugsweise in die anderen rohr- oder stangenförmigen Bauteile (2,3) formschlüssig eingesteckt. Statt der Knoten (4) können z.B. Ringe oder Muffen mit außenseitigem Umgriff der anderen Bauteile (2,3) eingesetzt werden. Letztere können untereinander eine gleiche oder unterschiedliche Formgebung haben. Die Bauteile können ansonsten auch eine beliebige andere Ausbildung und Form haben. In der gezeigten Ausführung bilden die Bauteile (2,3,4) miteinander einen sogenannten Gitterrahmen oder Space frame.

Derartige Fahrzeugkarosserien (1) werden in Bearbeitungsstationen nach und nach aus ihren Bauteilen (2,3,4), gegebenenfalls unter Bildung von Baugruppen, aufgebaut. Die Bauteile (2,3,4) werden dazu in den Bearbeitungsstationen in geeigneter Weise durch Spanneinrichtungen (nicht dargestellt) gespannt. Die Spanneinrichtungen positionieren die Bauteile (2,3,4) und gewährleisten die richtige Geometrie der Fahrzeugkarosserie (1).

In Ergänzung der dargestellten Ausführungsform können noch weitere Bauteile vorhanden sein, z.B. Bleche, Verkleidungen, massive Körper oder dergleichen.

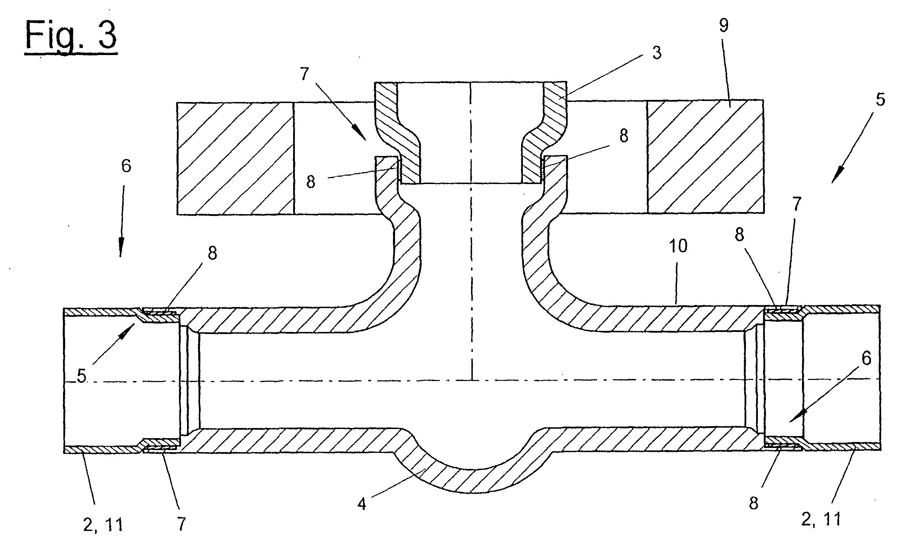

Die Bauteilverbindung besteht zunächst aus einer formschlüssigen Steckverbindung (5) der Bauteile (2,3,4), die zusätzlich durch ein Verbindungselement (8) fixierbar ist. Die Steckverbindung (5) kann in beliebig geeigneter Weise geschaffen werden. In der gezeigten Ausführungsform von Figur 2 und 3 bilden z.B. die hohlen Arme des Knotens (4) Aufnahmen oder Hohlteile (10), in die die Rohre (2,3) mit einem eingezogenen Ende als Steckteile (11) eingeführt werden. Die Zuordnung kann auch umgedreht sein. Desgleichen können die Arme des Knotens (4) auch eine Aufweitung zur Aufnahme der unverformten Rohrenden aufweisen.

Bei der gezeigten Steckverbindung (5) umgreifen sich die Bauteile (2,3,4) an der Verbindungsstelle (6) auf dem vollen Umfang. Hierbei handelt es sich um eine Rohrverbindung. In einer abgewandelten und nicht dargestellten Ausführungsform kann die Steckverbindung (5) bzw. die hierdurch geschaffene formschlüssige Führung auch nur teilweise vorhanden sein, indem z.B. das eine Bauteil eine seitlich offene Schalenform besitzt, in die das andere Bauteil eingeführt oder eingelegt wird. Die Querschnittsform der Steckverbindung (5) oder der Führung ist grundsätzlich beliebig wählbar. Insbesondere lassen sich auch hohle Bauteile mit massiven Bauteilen kombinieren.

An der Verbindungsstelle (6) der Steckverbindung (5) befinden sich im Überlappungs- und Kontaktbereich (7) jeweils Verbindungselemente (8), die extern aktivierbar sind. Beim Zusammenstecken der Bauteile (2,3,4) sind die Verbindungselemente (8) zunächst inaktiv und beeinträchtigen nicht das Einführen der Bauteile (2,3,4) und die Bildung der Steckverbindung (5). Die Verbindungselemente (8) werden erst später zu einem beliebig geeigneten Zeitpunkt extern aktiviert und schaffen dann die feste Verbindung und Fixierung zwischen den Bauteilen (2,3,4). Die externe Aktivierung kann von der Außenseite der Bauteile (2,3,4) erfolgen. Bei hohlen Bauteilen ist eine Aktivierung auch von der Innenseite her möglich.

Bei der externen Aktivierung wird den Verbindungselementen (8) vorzugsweise Energie, insbesondere Wärmeenergie oder elektromagnetische Energie, von außerhalb zugeführt. Grundsätzlich kann die Aktivierung auch auf andere Weise und über andere Energieformen, z.B. Strahlungsenergie, Ultraschall, Verformung oder dgl. erfolgen.

Die Steckverbindung (5) kann zunächst als gleitfähige Verbindung ausgeführt sein, die ein gegenseitiges Verschieben der Bauteile (2,3,4) beim Zusammenstecken und beim anschließenden Ausrichten der Fahrzeugkarosserie (1) erlaubt. Der Überlappungsbereich (7) mit dem zwischen den Bauteilen (2,3,4) eingebetteten Verbindungselement (8) bietet eine Möglichkeit zum Toleranzausgleich und eine breite Fügestelle. Der Überlappungsbereich (7) kann in seiner Ausdehnung entsprechend bemessen sein.

Das Verbindungselement (8) kann in beliebig geeigneter Weise ausgebildet sein. In der bevorzugten Ausführungsform handelt es sich um einen mit geringer Wärmezufuhr aktivierbaren Schmelzstoff, insbesondere einen Schmelzkleber oder ein Lot.

Das Verbindungselement (8) kann schon vorab an mindestens einem der Bauteile (2,3) angebracht sein. Figur 2 zeigt hierzu eine Ausführungsform, bei der die Randbereiche der hohlen Knotenarme innenseitig mit dem Verbindungselement (8) ringförmig ausgekleidet sind. Anstatt einer ringförmigen und durchgehenden Anordnung kann auch eine unterbrochene Anordnung, z.B. eine punkt- oder linienförmige Anordnung vorhanden sein. In einer weiteren Abwandlung ist es auch möglich, die beiden zu verbindenden Bauteile (2,3,4) jeweils mit einem Verbindungselement (8) vorauszurüsten, wobei die Verbindungselemente (8) unterschiedlicher Natur sein können und erst bei externer Aktivierung miteinander eine Verbindung eingehen.

In der bevorzugten Ausführungsform eines Schmelzkleber oder Lotes wird die Aktivierungswärme extern durch einen beweglichen Aktivator (9) aufgebracht. Dies ist in der bevorzugten Ausführungsform eine bewegliche Spulenanordnung, wie sie beispielsweise in Figur 1 dargestellt ist. Die Beweglichkeit der Spule (9) kann unterschiedlich sein. Zum einen ist die Spule (9) als Ganzes beweglich und kann z.B. über einen mehrachsigen Industrieroboter (nicht dargestellt) oder einen anderen geeigneten mehrfach beweglichen Manipulator an die Verbindungsstelle (6) heranbewegt werden. Zudem kann die Spulenanordnung (9) in sich selbst beweglich sein, indem sie aus zwei oder mehr Teilen besteht, die voneinander gelöst und wieder miteinander in Verbindung gebracht werden können. Auf diese Weise läßt sich z.B. der Spulenring (9) öffnen, um die Verbindungsstelle (6) legen und dann wieder schließen. Der Spulenring (9) kann dabei eine beliebig geeignete Formgebung haben. Er muß nicht kreisrund sein. Die Spulenanordnung (9) kann zudem mehrere Einzelspulen aufweisen und z.B. als mehrteiliger dem Werkstück nachgebildeter Forminduktor entsprechend der DE-A-44 28 565 gestaltet sein.

In der bevorzugten Ausführungsform werden die Verbindungselemente (8) mittels der Spulenanordnung (9) durch ein mittel- oder hochfrequentes Wechselstromfeld berührungslos und induktiv erwärmt. Der Frequenzbereich liegt vorzugsweise zwischen ca. 50 Hz und einigen 100 kHz. Aus der DE-A-195 27 827 ist eine entsprechende Generatoranordnung zur Erzeugung eines solchen Wechselstromfeldes bzw. eine sogenannte Glühstation bekannt. Alternativ kann in ähnlicher Weise auch eine konduktive Erwärmung stattfinden.

In einer anderen nicht dargestellten Ausführungsform kann die Aktivierung durch Einwirkung von Druck oder Kraft erfolgen. Hierfür können z.B. ein oder mehrere Bauteile (2,3,4) plastisch verformt werden. Das Verbindungselement (8) kann hierbei als druckaktivierbarer Klebstoff ausgebildet sein, der z.B. Klebstoffperlen beinhaltet, die zunächst inaktiv sind und erst unter Druck zerplatzen und den eingeschlossenen Kleber freisetzen. Die Bauteilverformung kann auf rein mechanischen Weg durch ein Preßwerkzeug erfolgen. Alternativ ist auch ein elektromagnetisches Umformen, z.B. entsprechend der DE-A-31 31 393 oder ein hydraulisches Innenhochdruckumformen, z.B. entsprechend der DE-A-32 23 004 möglich. Beim elektromagnetischen Umformen kann mit einer ähnlich gestalteten Spule (9) wie beim vorbeschriebenen Ausführungsbeispiel gearbeitet werden. Grundsätzlich sind beliebige Verformungstechniken einsetzbar. Ferner können auch die Art des Verbindungselementes und/oder die Art der Aufbringung von Kraft oder Druck beliebig variieren.

Abwandlungen des gezeigten Ausführungsbeispiels sind in verschiedener Weise möglich. Zum einen können die Bauteile (2,3,4) zumindest teilweise massiv ausgebildet sein. Sie können außerdem aus beliebigen Werkstoffen bestehen, die auch von Bauteil zu Bauteil variieren können. Hierbei kommen insbesondere Werkstoffkombinationen zwischen Leichtmetallen und Stahl, aber auch Kunststoffen und anderen nichtmetallischen Materialien in Frage. Das Verbindungselement kann statt durch Wärme oder Kraft bzw. Druck auch auf andere Weise aktiviert werden, z.B. durch Ultraschall, UV-Strahlung oder dergleichen. In diesen Fällen kann das Verbindungselement (8) z.B. als Einkomponenten- oder Mehrkomponentenklebstoff ausgebildet sein.

### BEZUGSZEICHENLISTE

- 1: Fahrzeugkarosserie, Rohrrahmen
- 2: Bauteil, Rohr
- 3: Bauteil, Rohr
- 4: Bauteil, Knoten
- 5: Steckverbindung
- 6: Verbindungsstelle
- 7: Überlappungsbereich, Kontaktbereich
- 8: Verbindungselement, Kleber, Lot
- 9: Aktivator, Spule
- 10: Hohlteil, Aufnahme
- 11: Steckteil

## Patentansprüche

1. Verfahren zur Verbindung von zwei oder mehr Bauteilen (2,3,4) einer als Rohrrahmen ausgebildeten Fahrzeugkarosserie (1) oder eines Fahrwerks, die über eine überlappte Steckverbindung (5) miteinander verbunden und durch ein an der Verbindungsstelle (6) im Überlappungs- und Kontaktbereich (7) der Bauteile (2,3,4) angeordnetes Verbindungselement (8) zusätzlich fixiert werden, **dadurch gekennzeichnet, daß** das Verbindungselement (8) beim Zusammenführen der Bauteile (2,3,4) zunächst inaktiv ist und zu einem beliebigen Zeitpunkt nach Schaffen der Steckverbindung (5) extern aktiviert wird und die Steckverbindung (5) fixiert.

2. Verfahren nach Anspruch 1, **dadurch gekennzeichnet, daß** das Verbindungselement (8) durch Energiezufuhr extern aktiviert wird.

3. Verfahren nach Anspruch 1 oder 2, **dadurch gekennzeichnet, daß** das Verbindungselement (8) kalt oder mit geringer Wärme aktiviert wird.

4. Verfahren nach Anspruch 1, 2 oder 3, **dadurch gekennzeichnet, daß** das Verbindungselement (8) durch Kraft oder Druck oder durch eine Verformung zumindest eines Bauteils (2,3,4) aktiviert wird.

5. Verfahren nach einem der Ansprüche 1 bis 4, **dadurch gekennzeichnet, daß** das Verbindungselement (8) durch ein mittel- oder hochfrequentes Wechselstromfeld berührungslos und induktiv aktiviert wird.

6. Verfahren nach einem der Ansprüche 1 bis 5, **dadurch gekennzeichnet, daß** um die Steckverbindung (5) ein beweglicher Aktivator (9), insbesondere eine bewegliche Spulenanordnung gelegt wird.

7. Bauteilverbindung von zwei oder mehr Bauteilen (2,3,4) einer als Rohrrahmen ausgebildeten Fahrzeugkarosserie (1) oder eines Fahrwerks, die über eine überlappte Steckverbindung (5) miteinander verbindbar und durch ein an der Verbindungsstelle (6) im Überlappungs- und Kontaktbereich (7) angeordnetes Verbindungselement (8) zusätzlich fixierbar sind, **dadurch gekennzeichnet, daß** das Verbindungselement (8) beim Zusammenführen der Bauteile (2,3,4) zunächst inaktiv und nach Schaffen der Steckverbindung (5) extern aktivierbar ist.

8. Bauteilverbindung nach Anspruch 7, **dadurch gekennzeichnet, daß** mindestens eines der Bauteile (2,3,4) vorbereitet und mit einem Verbindungselement (8) ausgerüstet ist.

9. Bauteilverbindung nach Anspruch 7 oder 8, **dadurch gekennzeichnet, daß** das Verbindungselement (8) kalt oder mit geringer Wärme aktivierbar ist.

10. Bauteilverbindung nach Anspruch 7, 8 oder 9, **dadurch gekennzeichnet, daß** das Verbindungselement (8) als wärmeaktivierbarer Schmelzstoff, insbesondere als Klebstoff oder Lot ausgebildet ist.

11. Bauteilverbindung nach einem der Ansprüche 7 bis 10, **dadurch gekennzeichnet, daß** das Verbindungselement (8) über einen beweglichen Aktivator (9), insbesondere eine bewegliche Spulenanordnung, induktiv aktivierbar ist.

12. Bauteilverbindung nach einem der Ansprüche 7 bis 11, **dadurch gekennzeichnet, daß** das Verbindungselement (8) durch Kraft oder Druck oder durch eine Verformung zumindest eines Bauteils (2,3,4) aktivierbar ist.

## Claims

1. A process for connecting two or more components (2, 3, 4) of a vehicle body (1), constructed as a tubular frame, or a chassis, which are mutually connected by way of an overlapped plug-type connection (5) and are additionally fixed by a connecting element (8) arranged at the connecting point (6) in the overlapping and contact region (7) of the components (2, 3, 4), **characterised in that** the connecting element (8) is firstly inactive when the components (2, 3, 4) are brought together and, at any time point after production of the plug-type connection (5), is activated externally and fixes the plug-type connection (5).

2. A process according to Claim 1, **characterised in that** the connecting element (8) is activated externally by an energy supply.

3. A process according to Claim 1 or 2, **characterised in that** the connecting element (8) is activated cold or with a slight heat.

4. A process according to Claim 1, 2 or 3, **characterised in that** the connecting element (8) is activated by force or pressure or by deformation of at least one component (2, 3, 4).

5. A process according to one of Claims 1 to 4; **characterised in that** the connecting element (8) is activated without contact and inductively by a mid-frequency or high-frequency alternating field.

6. A process according to one of Claims 1 to 5, **characterised in that** a movable activator (9), in particular a movable coil arrangement, is placed about the plug-type connection (5).

7. A component connection for two or more components (2, 3, 4) of a vehicle body (1), constructed as a tubular frame, or a chassis, which may be mutually connected by an overlapped plug-type connection (5) and may be additionally fixed by a connecting element (8) arranged at the connecting point (6) in the overlapping and contact region (7), **characterised in that** the connecting element (8) is firstly inactive when the components (2, 3, 4) are brought together, and may be activated externally after production of the plug-type connection (5).

8. A component connection according to Claim 7, **characterised in that** at least one of the components (2, 3, 4) is prepared and equipped with a connecting element (8).

9. A component connection according to Claim 7 or 8, **characterised in that** the connecting element (8) may be activated cold or with a slight heat.

10. A component connection according to Claim 7, 8 or 9, **characterised in that** the connecting element (8) is constructed as a flux which may be heat-activated, in particular as an adhesive or solder.

11. A component connection according to one of Claims 7 to 10, **characterised in that** the connecting element (8) may be activated inductively by way of a movable activator (9), in particular a movable coil arrangement.

12. A component connection according to one of Claims 7 to 11, **characterised in that** the connecting element (8) may be activated by force or pressure or by deformation of at least one component (2, 3, 4).

## Revendications

1. Procédé d'assemblage de deux ou plus de deux éléments (2, 3, 4) de construction d'une carrosserie (1) de véhicule réalisée sous forme de cadre tubulaire ou d'un châssis, éléments qui sont mutuellement assemblés au moyen d'un assemblage (5) par emboîtement à recouvrement et qui sont en outre immobilisés par un composant (8) d'assemblage disposé au point (6) d'assemblage dans la région (7) de recouvrement et de contact des éléments (2, 3, 4) de construction, **caractérisé en ce que** le composant (8) d'assemblage est initialement inactif lors de la réunion des éléments (2, 3, 4) de construction et il est activé de manière externe à un instant quelconque après avoir réalisé l'assemblage (5) par emboîtement, et immobilise l'assemblage (5) par emboîtement.

2. Procédé suivant la revendication 1, **caractérisé en ce que** l'activation externe du composant (8) d'assemblage s'effectue par apport d'énergie.

3. Procédé suivant la revendication 1 ou 2, **caractérisé en ce que** le composant (8) d'assemblage est activé à froid ou avec un faible apport de chaleur.

4. Procédé suivant la revendication 1, 2 ou 3, **caractérisé en ce que** le composant (8) d'assemblage est activé par force ou par pression, ou par une déformation d'au moins un élément (2, 3, 4) de construction.

5. Procédé suivant l'une des revendications 1 à 4, **caractérisé en ce que** le composant (8) d'assemblage est activé sans contact et par induction au moyen d'un champ de courant alternatif à moyenne ou haute fréquence.

6. Procédé suivant l'une des revendications 1 à 5, **caractérisé en ce qu'**un activateur (9) mobile, notamment un ensemble mobile de bobine, est placé autour de l'assemblage (5) par emboîtement.

7. Assemblage de deux ou plus de deux éléments (2, 3, 4) de construction d'une carrosserie (1) de véhicule réalisée sous forme de cadre tubulaire ou d'un châssis, éléments qui peuvent être mutuellement assemblés au moyen d'un assemblage (5) par emboîtement à recouvrement et qui peuvent être en outre immobilisés par un composant (8) d'assemblage disposé au point (6) d'assemblage dans la région (7) de recouvrement et de contact des éléments (2, 3, 4) de construction, **caractérisé en ce que** le composant (8) d'assemblage est initialement'inactif lors de la réunion des éléments (2, 3, 4) de construction et il peut être activé de manière externe après avoir réalisé l'assemblage (5) par emboîtement.

8. Assemblage d'éléments de construction suivant la revendication 7, **caractérisé en ce qu'**au moins un des éléments (2, 3, 4) de construction est préparé et pourvu d'un composant (8) d'assemblage.

9. Assemblage d'éléments de construction suivant la revendication 7 ou 8, **caractérisé en ce que** le composant (8) d'assemblage peut être activé à froid ou avec un faible apport de chaleur.

10. Assemblage d'éléments de construction suivant la revendication 7, 8 ou 9, **caractérisé en ce que** le composant (8) d'assemblage est réalisé sous la forme d'un matériau fusible pouvant être activé à la chaleur, notamment sous forme de colle ou de métal d'apport de brasage.

11. Assemblage d'éléments de construction suivant l'une des revendications 7 à 10, **caractérisé en ce que** le composant (8) d'assemblage peut être activé par induction au moyen d'un activateur (9) mobile, notamment d'un ensemble mobile de bobine.

12. Assemblage d'éléments de construction suivant l'une des revendications 7 à 11, **caractérisé en ce que** le composant (8) d'assemblage peut être activé par force ou par pression, ou par une déformation d'au moins un élément (2, 3, 4) de construction.
